# EUROPEAN PATENT APPLICATION

(11) **EP 3 467 736 A1**
(43) Date of publication of application: **10.04.2019**
(21) Application number: 17195521.4
(22) Date of filing: 09.10.2017
(51) Int. Cl.: G06Q 10/08, G06Q 50/28

(54) **IMPROVED PARCEL DELIVERY SYSTEM AND METHOD**

(71) Applicant: Smart Life Inventions, 3621 Rekem (BE)
(72) Inventor: Velle, Gerrit, 3621 Rekem (BE)
(74) Representative: Brantsandpatents bvba

(57) **Abstract**

The current invention concerns a postal delivery system and method for worldwide delivery of post and parcels, the system comprising a recipient device, a sender system, an identification server system and a delivery server system. The recipient device hereby comprises a reading module which comprises a code scanner for scanning a code provided on the postal delivery and a user registration module.

## Description

### TECHNI CAL Fl ELD

The invention pertains to the technical field of systems and methods for ensuring correct delivery of post and postal packages, in particular parcels. The invention thereto relates to an interconnected system of dedicated devices and/or systems at the sender end and at the receiver end, and of an identification server system and a delivery server system, which are operated to ensure correct delivery of tangible post, i.e. letters, parcels or other packages.

### BACKGROUND

In the field of postal delivery, and in particular parcel delivery, the main concern of the sender is that the post is delivered to the correct recipient without any delay, and preferably with an acknowledgement of receipt. Systems and methods have been developed to ensure such correct delivery including the method of registered mail, by which the mail receives a code which is stamped or otherwise applied onto the mail by the sender or a delivery service agent, whereby the delivery service agent delivers the mail to the sender in person, and whereby the recipient signs a receipt indicating said code, which is then sent back to the sender as acknowledgement or to a central database for inspection by the sender.

A more automated system and method is disclosed in WO 2009/148388 A1, disclosing a system and methods for safe receiving and/or delivering a parcel provided with a parcel identification tag. The system comprises a parcel receiving and/or delivering unit adapted to receive and/or deliver a parcel. The parcel receiving and/or delivering unit comprises a parcel information receiving unit adapted to receive information from the parcel identification tag, and a user information receiving unit adapted to receive information from a user identification tag, which is associated with a user for identifying the user.

A delivery and collection apparatus is disclosed in US 2015/0371468 A1, disclosing a storage container for storing postal items, the container comprising: a container with a door, a locking means for locking the door shut, code input means for inputting a code to unlock the locking means, weighing means for measuring the weight of contents of the container, and communication means for communicating the measured weight of the contents when the door is locked shut, wherein a code for unlocking the locking means varies over time. The idea herein is to secure a mailbox, i.e. to refuse unauthorized users from opening the mailbox, on the basis of a time-dependent access code. As such, the mailbox of US 2015/0371468 represents a "closed system", in the sense that authorization to access the mailbox is provided only to a specific user. This systems lacks an efficient way of allowing unidentified users access to the mailbox, e.g. to drop off parcels of certain size.

Prior art methods and systems such as those described above, tend to be of a "static" nature, in the sense that senders and recipients have a fixed address. Furthermore, these prior art methods may also suffer from addressing problems, leading to incorrect delivery, late delivery, or return delivery. These addressing problems could arise from:
- differences in writing down addresses in different countries;
- differences in a nation's organizational structure (states, provinces, counties, towns, etc...);
- differences in types of postal codes (letters and/or numbers, number of characters);
- differences in writing systems or scripts of different languages (Latin-based, Cyrillic, Japanese, Chinese, Korean, Thai, ...).

Hence there is a need in the art for a system and method which is easy to use and which still ensures correct worldwide delivery of post and parcels, independent of different ways of writing down addresses worldwide.

Furthermore, a user of multiple web-shop must change all pre-saved addresses if he or she changes address. Also this situation can cause delays in delivery or even return deliveries and puts a sometimes heavy burden on the mover to notify all his or her providers and correspondents of the new address. A related situation in which prior art methods lead to late or return deliveries, is the case in which a person moves around regularly, e.g. for work-related purposes in an international business, when doing a trip around the world, when volunteering for an NGO to work in third-world countries, etc. There remains a need in the art for an improved delivery method and system allowing mail and parcels to be delivered to the correct person, also if this person has recently, or not so recently, moved or if the person travels a lot.

The present invention aims to resolve at least some of the problems mentioned above.

The invention thereto aims to provide a delivery system and method allowing correct worldwide delivery even in the case of a recently moved or regularly travelling recipient.

### SUMMARY OF THE INVENTION

The present invention provides a postal delivery system and method for worldwide delivery of post and parcels as specified in the claims and further below. The present invention also provides a recipient device, a sender system, an identification (ID) server system and a delivery server system as specified in the claims and further below. The present invention also provide a method for registering one or more users of a recipient device in a first database as well as a method for delivering a postal delivery from a sender system to a recipient system as specified in the claims and further below.

### DESCRI PTI ON OF Fl GURES

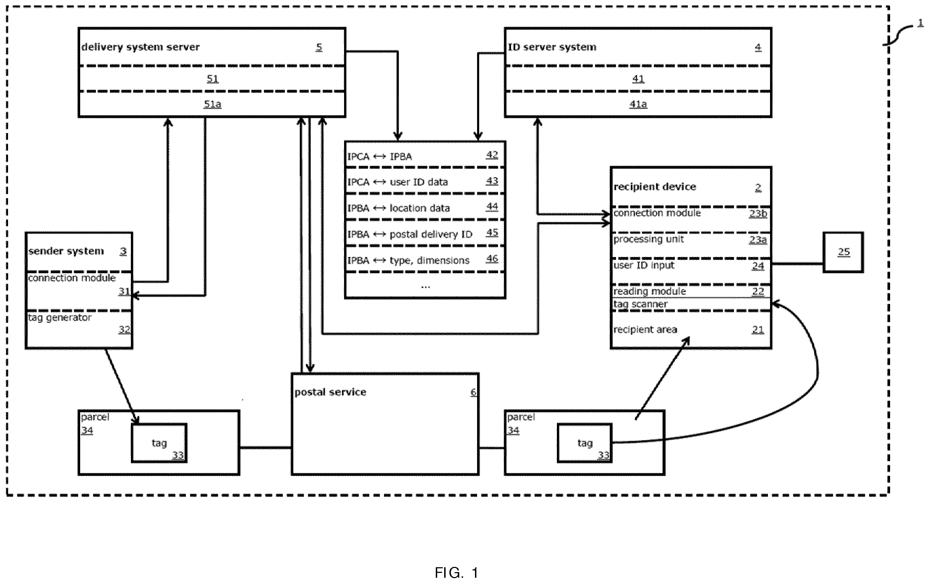

**Figure 1** illustrates an embodiment of a system and method for worldwide delivery of post and parcels according to the present invention, as well as the parts of the system and method.

### DETAILED DESCRIPTION OF THE INVENTION

The present invention concerns a postal delivery system and method for worldwide delivery of post and parcels.

The system and method for worldwide delivery of post and parcels of the present invention are illustrated by fig. 1, wherein one sender system and one recipient device are shown. The system and method of the present invention are scalable to multiple sender systems and to multiple recipient devices.

The postal delivery system (1) for worldwide delivery of post and parcels hereby comprises a recipient device (2), a sender system (3), an identification (ID) server system (4) and a delivery server system (5).

The recipient device (2) comprises:
- a reception area (21) for receiving a postal delivery, preferably for receiving a parcel;
- optionally a reading module (22) which comprises a code scanner for scanning a code comprised in a tag provided on the postal delivery;
- a recipient processing unit (23a) connected to tangible non-volatile memory provided with program code for instructing said recipient processing unit, and at least one recipient connection module (23b) configured to connect the recipient processing unit with the identification server system (4) and the delivery server system (5), whereby the non-volatile memory comprises information representing an Internet Post Box Address (IPBA) assigned uniquely to the recipient device;
- a user registration module (24) comprising a user input module (25) for obtaining user input data, the user registration module (24) connected to the recipient processing unit (23), whereby the recipient processing unit is configured to send user registration data to the identification server system (4), the user registration data comprising user identification data derived from said user input data and the IPBA.

The sender system (3) comprises:
- a sender connection module (31) configured to connect the sender system (3) with the delivery server system (5) to:
   - send recipient identification data to the delivery server system (5), the recipient identification data allowing the delivery server system (5) to determine an Internet Post Client Address (IPCA) assigned uniquely to a user, and to
   - receive a code comprising information representing at least the IPBA of a recipient device or to receive said information representing at least the IPBA of a recipient device whereby the sender system (3) is configured to produce a code comprising information representing at least the IPBA of the recipient device;
- a tag generating module (32) for generating a tangible tag (33) comprising said code comprising information representing at least the IPBA of the recipient device, said tangible tag (33) connected to or connectable to the postal delivery (34).

The identification server system (4) comprises an ID processing unit (41) connected to tangible non-volatile memory provided with program code for instructing said ID processing unit (41), and an ID connection module (41a) configured to connect the ID processing unit (41) with the recipient device (2) and the delivery server system (5), wherein the ID processing unit (41) is configured to, upon receiving user registration data from a recipient device (2), linking in a first database (42) the IPBA contained within the user registration data to the IPCA of the user, on the basis of the user identification data contained in the user registration data, by looking up the IPCA in a second database (43) wherein IPCAs are linked to user identification data.

The delivery server system (5) comprises a delivery processing unit (51) connected to tangible non-volatile memory provided with program code for instructing said delivery processing unit (51), and at least one delivery connection module (51a) configured to connect the delivery processing unit (51) with one or more sender systems (3) and optionally with a postal service system (6) and/or one or more recipient devices (2), wherein the delivery processing unit (51) is configured, upon receiving recipient information data from a sender system (3):
- to determine the IPCA of the user from the recipient identification data;
- to obtain the IPBA of the recipient device linked to the IPCA by looking up the IPBA in said first database (42), and
- to send the code comprising information representing at least the IPBA of the recipient device to the sender system (3) or to send said information representing at least the IPBA of the recipient device to the sender system (3) such that the sender system (3) can produce a code comprising information representing at least the IPBA of the recipient device.

The method for worldwide delivery of post and parcels of the present invention hereby comprises the following steps:
- registering one or more users of a recipient device in a first database, by:
   - inputting user input data for a user in a user input module of a recipient device;
   - sending user registration information comprising user identification data derived from said user input data, and an Internet Post Box Address (IPBA) assigned uniquely to the recipient device, to an identification server system;
   - linking in a first database (42) the IPBA contained within the user registration data to an Internet Post Client Address (IPCA) of the user, on the basis of the user identification data contained in the user registration data, by looking up the IPCA in a second database (43) wherein IPCAs are linked to user identification data,
- preparing a postal delivery for delivery from a sender system to a recipient device, by:
   - providing recipient identification data to the sender system, said recipient identification data allowing determination of an Internet Post Client Address (IPCA) assigned uniquely to a user;
   - determining an Internet Post Box Address (IPBA) of the recipient device linked to the IPCA by looking up the IPBA in a first database (42) via a delivery system server,
   - determining a code comprising information representing at least the IPBA of the recipient device to the sender system (3);
   - providing a tangible tag on a postal delivery, said tangible tag comprising said code comprising information representing at least the IPBA of the recipient device, and
- sending the postal delivery to the recipient device.

The invention concerns in a further aspect also dedicated portions of the above system and method.

The invention thus also concerns a recipient device (2) comprising:
- a reception area (21) for receiving a postal delivery, preferably for receiving a parcel;
- optionally a reading module (22) which comprises a code scanner for scanning a code comprised in a tag provided on the postal delivery;
- a recipient processing unit (23a) connected to tangible non-volatile memory provided with program code for instructing said recipient processing unit, and at least one recipient connection module (23b) configured to connect the recipient processing unit with an identification server system (4) and a delivery server system (5), whereby the non-volatile memory comprises information representing an Internet Post Box Address (IPBA) assigned uniquely to the recipient device;
- a user registration module (24) comprising a user input module (25) for obtaining user input data, the user registration module (24) connected to the recipient processing unit (23), whereby the recipient processing unit is configured to send user registration data to the identification server system (4), the user registration data comprising user identification data derived from said user input data and the IPBA.

The invention also concerns a sender system (3) comprising:
- a sender connection module (31) configured to connect the sender system (3) with a delivery server system (5) to:
   - send recipient identification data to the delivery server system (5), the recipient identification data allowing the delivery server system (5) to determine an Internet Post Client Address (IPCA) assigned uniquely to a user, and to
   - receive a code comprising information representing at least the IPBA of a recipient device or to receive said information representing at least the IPBA of the recipient device whereby the sender system (3) is configured to produce a code comprising information representing at least the IPBA of the recipient device;
- a tag generating module (32) for generating a tangible tag (33) comprising said code comprising information representing at least the IPBA of the recipient device, said tangible tag (33) connected to or connectable to the postal delivery (34).

The invention also concerns an identification server system (4) comprising an ID processing unit (41) connected to tangible non-volatile memory provided with program code for instructing said ID processing unit (41), and an ID connection module (41a) configured to connect the ID processing unit (41) with a recipient device (2) and a delivery server system (5), wherein the ID processing unit (41) is configured to, upon receiving user registration data from a recipient device (2), linking in a first database (42) the IPBA contained within the user registration data to the IPCA of the user, on the basis of the user identification data contained in the user registration data, by looking up the IPCA in a second database (43) wherein IPCAs are linked to user identification data.

The invention also concerns a delivery server system (5) comprising a delivery processing unit (51) connected to tangible non-volatile memory provided with program code for instructing said delivery processing unit (51), and at least one delivery connection module (51a) configured to connect the delivery processing unit (51) with one or more sender systems (3) and optionally with a postal service system (6) and/or one or more recipient devices (2), wherein the delivery processing unit (51) is configured, upon receiving recipient information data from a sender system (3):
- to determine the IPCA of the user from the recipient identification data;
- to obtain the IPBA of the recipient device linked to the IPCA by looking up the IPBA in a first database (42), and
to send code comprising information representing at least the IPBA of the recipient device to the sender system (3) or to send said information representing at least the IPBA of the recipient device to the sender system (3) such that the sender system (3) can produce a code comprising information representing at least the IPBA of the recipient device.

The present invention further also concerns a method for registering one or more users of a recipient device in a first database. This registration method comprises the steps of:
- inputting user input data for a user in a user input module of a recipient device;
- sending user registration information comprising user identification data derived from said user input data, and an Internet Post Box Address (IPBA) assigned uniquely to the recipient device, to an identification server system;
- linking in a first database (42) the IPBA contained within the user registration data to an Internet Post Client Address (IPCA) of the user, on the basis of the user identification data contained in the user registration data, by looking up the IPCA in a second database (43) wherein IPCAs are linked to user identification data.

The present invention further also concerns a method for delivering a postal delivery from a sender system to a recipient system, by:
- providing recipient identification data to the sender system, said recipient identification data allowing determination of an Internet Post Client Address (IPCA) assigned uniquely to a user;
- determining an Internet Post Box Address (IPBA) of the recipient device linked to the IPCA by looking up the IPBA in a first database (42) via a delivery system server,
- determining a code comprising information representing at least the IPBA of the recipient device to the sender system (3);
- providing a tangible tag on a postal delivery, said tangible tag comprising said code comprising information representing at least the IPBA of the recipient device, and
- sending the postal delivery to the recipient device.

The advantages of the above aspects of the present invention are further described below, as well as further preferred embodiments. Note that preferred embodiments for portions of the system and/or method for worldwide delivery of post and parcels, can also be applied to the full system and/or method.

A main advantage over prior art systems and methods is that the present systems and methods are open, in the sense that basically every sender system can be used to send a postal delivery to a specific recipient device, i.e. no authorization is required from the sender system. Further, the present systems and methods prevent addressing problems, as the tag on the postal delivery only requires information concerning the IPBA of the recipient device, which has a pre-defined format and does not depend on local or national ways of addressing. Also, in the case of e.g. online shopping, a person ordering an item which can be sent in a postal delivery, only needs to provide the online shop with his or her IPCA or with information allowing the IPCA to be determined by the delivery system server (e.g. a unique username). This person does not have to provide full address data. As a result, the ordering web page of the online shop can be filled in more simply and problems regarding worldwide differences in addressing formats are prevented. Also, if a person changes address (temporarily or permanently), he or she can keep the same IPCA or username, as the change in address is automatically dealt with by the system and method of the present invention by changing the IPBA linked to the IPCA or the location data linked to the IPBA. All the person has to do, is to register his or her user input data into the new or relocated recipient device.

In this respect, it is preferred that the user input module (25) for obtaining user input data, comprises a biometric scanner such as a fingerprint scanner. The user data thereby comprises biometric data of the user. This makes it very easy for a user to register at a recipient device as it does not require any further information to be remembered and entered by the user. Additionally or alternatively, the user input module comprises other input means such as a keyboard and/or numeric pad to enter identification information and optionally contact information such as an e-mail address or a (mobile) phone number which can also be stored in the second database.

The recipient connection module (23a) may comprise one or more components allowing wired or wireless connections to existing networks for communication, such as the internet, GPRS, 3G, 4G, 5G, low-power LAN (LPLAN), WiFi, etc. Preferably 2, 3, 4 or more components are comprised in the reception connection module, each of which providing connectivity according to different techniques and/or protocols, thereby ensuring redundancy of connection options. It is important that the recipient device can connect to the delivery server system to request information - if required - when the recipient device is presented with a postal delivery's tag.

The reception area (21) of the recipient device is a physical space allowing reception of the postal delivery and is preferably conceived for receiving a parcel. The reception area is typically a box having a closable door or flap through which the postal delivery can be entered into the box. The dimensions of the reception area and of its opening for postal deliveries are preferably fixed to the recipient device, hence also the maximum sizes of postal deliveries is known once the type of recipient device is known. Hence in a preferred embodiment, the user registration data which is sent to the ID server system also comprises information representing a type-identification of the recipient device, whereby the ID server system is configured to update a third database in which the IPBA is linked to a recipient device-type and/or to a set of maximal postal delivery sizes. This third database will allow a sender system or the delivery system server to check if a postal delivery of specific dimensions will fit into the recipient device, and will prevent non-delivery of oversized postal delivery. This can be done by notifying the sender system that the postal delivery will not fit and thus allowing a different type of packaging of the postal delivery, or the delivery system may be configured to select the IPBA a secondary recipient device for further processing. The IPBA of this secondary recipient device could hereby also be registered in the first database, hence linking the IPCA to a list of IPBAs of recipient devices which are registered by the user linked to the IPCA.

In this respect, the user registration data sent from recipient device to ID server system may also comprise information identifying the IPBA of the recipient device as a primary device or as a secondary device, or alternatively with an indication of the priority of the recipient device within the list of recipient devices whose IPBA are linked to the IPCA of the user, thereby allowing the ID server system to determine if the first database needs to be updated by replacing the IPBA of a previously registered recipient device with the newly transmitted IPBA or by adding the newly transmitted IPBA to the list of IPBAs linked to the IPCA of the user.

In the present invention, the user of a recipient device is allowed to register directly at the recipient device. This ensures correct registration of the recipient device and the IPBA thereof in the first database, linking the IPBA to the IPCA on the basis of the user ID data. In the case of a biometric scanner being used, registration of the user requires physical presence of the user at the recipient device. This ensures correct and easy registration, in particular if the user is a frequently travelling person. In this case, the user can easily register at the recipient device of e.g. the hotel he/she is staying, after which all further postal deliveries will be sent to the new recipient device. Note that also previously sent postal deliveries, which either had already been delivered oat the previous recipient device, or the postal deliveries which were underway, could be re-directed to the new recipient device, e.g. after the postal service contacts the delivery server system, e.g. by scanning the code on the postal delivery's tag with a dedicated code scanning device or using a dedicated code scanning app on a device.

The code for the tag comprises at least the IPBA of the recipient device, but may preferably also comprise one or more of the following data:
- IPCA of the user to allow identification of the user: e.g. if more than one user is registered to the recipient device, the IPCA of the user can be used to identify who the postal delivery eventually belongs to. Note that the reading module can be configured to display or provide a message in which the IPCA and/or the user thereof is identified when the code is presented to the code scanner.
- IPCA of the sender or other sender identification data to allow easy returns in case of non-delivery or to allow identification of the sender e.g. at the moment the code is scanned and read by the recipient device. Furthermore, identification of the sender could be important for registered postal deliveries, wherein identity of both sender and recipient need to be identifiable from the postal delivery;
- Location data of the recipient device, e.g. longitude and latitude or a common address;
- A ordering or reference number: e.g. in case the postal delivery contains an order from an online shop, typically a reference number is given to the order which can also be present on the code. In the latter example, preferably it is the sender system which constructs the code to be applied to the tangible tag or the sender system also sends this reference number through to the delivery server system which then composes the code incorporating said reference number.

In a preferred embodiment, the sender system also comprises a recipient device according to the present invention. In this case, the code may also comprise the IPBA of the recipient device of the sender system.

In a preferred embodiment, the code provided on the tangible tag is a quick response (QR) code. QR codes can be easily read and allow reading of the information in the code without connection to the delivery server system. Nevertheless, it may be possible that the code is encrypted allowing the code only to be read by authenticated clients or devices, and/or only after communication with the delivery server system. The recipient device preferably comprises a reading module (22) which comprises a code scanner for scanning a code comprised in a tag provided on the postal delivery. In a preferred embodiment, the recipient device is configured to derive the IPBA from the code on the tag on the postal delivery and to check if this IPBA on the tag coincides with the IPBA of the recipient device. If the IPBAs coincide, the recipient device may perform an action indicating that the postal delivery has arrived at the correct recipient device. This may include opening the recipient area of the recipient device for allowing the postal delivery to be inserted and/or provide a positive message on a display provided on the recipient device. If the IPBAs do not coincide, the recipient area may be kept closed and/or a negative message may be provided on said display of the recipient device.

Alternatively or additionally, the code comprised in the tag on the postal delivery may comprise also information representing a postal delivery ID, uniquely assigned to a postal delivery by the delivery system server and linked to the IPBA of the intended recipient device and preferably also to the IPCA of the user to which the postal delivery is sent in a fourth database accessible by the delivery server system. The recipient device may then, upon having read the code on the tag of the postal delivery, connect to the delivery system server to transmit its IPBA and at least a portion of the code. The delivery system server can be configured to check if the IPBA transmitted by the recipient device coincides with the IPBA contained within the transmitted portion of the code and/or with the IPBA linked in the fourth database to the postal delivery ID contained within the transmitted portion of the code. A signal comprising confirmation or disagreement can respectively be sent to the recipient device, which can then take the proper action as discussed above.

In case of confirmation, the fourth database can be updated by the delivery system server, e.g. the postal delivery with the received postal delivery ID can be flagged as being delivered, and confirmation can be sent to e.g. the sender system. In case of disagreement, the delivery system server may provide a message to the postal service indicating that a postal delivery is being presented at a wrong recipient device and may provide location information of the correct recipient device to the postal service.

Further, the delivery server system may sent a message of delivery to the user of the recipient device. Hereby, the delivery server system can be provided with the IPCA of the user either directly when this IPCA is contained in the transmitted portion of the code, or by looking up the IPCA connected to the postal delivery ID contained in the transmitted portion of the code. Hereby the IPCA can be linked to contact details of the user, such as an e-mail address and/or a telephone number.

In the present invention, the recipient device comprises an IPBA. In an embodiment, this IPBA can be hardware-coded into the recipient device. In another embodiment, it can be assigned to the recipient device, e.g. when it is installed in a particular location and it is made to connect to a recipient installation server system, which is configured to maintain a fifth database linking IPBAs to hardware addresses of recipient devices and also to location data of the recipient device and optionally other identifiable data linked to the recipient device, such as an internet protocol (IP) number. The protocol to install a recipient device thus comprises that the recipient device is configured to contact the recipient installation server system and transmits its hardware address, location data (e.g. based on a built-in Global Positioning system (GPS) module), and optionally e.g. IP number, to the recipient installation server system. The recipient installation server system then assigns and transmits a unique IPBA to the recipient device. The recipient installation server system also updates the fifth database with the location data or optionally the other identifiable data linked to the recipient device. As such, a database can be constructed which can be made accessible to the delivery system server in order to check the location or other identifiable data of a recipient device on the basis of the IPBA. Note that hereby the location data may comprise easily interpretable coordinates (e.g. longitude-latitude) and may also contain a classic address (country, town, postal code, street, street number, apartment number). If a postal service thus needs to know how to handle a postal delivery, it may send a request to the delivery system service, the request containing at least a portion of the code comprised in the tag on the postal delivery or the request containing the IPBA derived from said tag, and the delivery system may then provide the postal service with the location data of the recipient device linked to the IPBA and retrieved from the fifth database. This transmitted location data may be transmitted in a pre-defined format depending on the postal service requesting the location data.

Also, in the event a certain recipient device is being re-located, the installation protocol may comprise that both the hardware address of the recipient device and the previously assigned IPBA is transmitted to the recipient installation server system, together with the new location data and/or the other identifiable data linked to the recipient device at the new location (e.g. new IP address), thereby allowing an update of the fifth database.

As the hardware address is embedded to the recipient device, communication of the hardware address to a server system also allows identification of the type of recipient device linked to the IPBA assigned to it. Hence, additionally or alternatively to the previously described embodiment wherein the ID server system is configured to update a third database in which the IPBA is linked to a recipient device-type and/or to a set of maximal postal delivery sizes, the recipient installation server system may be configured to maintain or update said third database, thereby linking the IPBA assigned to a recipient device having a hardware address, to a recipient device-type and/or to a set of maximal postal delivery sizes, e.g. by looking up the type of device which has been assigned the hardware address.

Hence in a preferred embodiment, the user registration data which is sent to the ID server system also comprises information representing a type-identification of the recipient device, whereby the ID server system is configured to update a third database in which the IPBA is linked to a recipient device-type and/or to a set of maximal postal delivery sizes.

In an embodiment, the recipient device comprises a location module, allowing localization of the recipient device. In a further embodiment, the localization of the the recipient device is regularly transmitted to the recipient installation server system to allow regular updating of the location data of the recipient device.

The recipient identification data which is sent by the sender system to the delivery server system, may directly include the IPCA of the user or it may comprise information such as user identification data allowing the delivery server system to obtain the IPCA from the second database.

In a preferred embodiment, the delivery server system is configured to the code which is to be comprised into the tangible tag to be applied to the postal delivery. This code comprises information representing at least the IPBA of the recipient device linked to the IPCA. This code preferably also comprises information representing a unique postal delivery ID, allowing easy tracking of the postal delivery and confirmation of receipt. Alternatively or additionally, the delivery system server may also send information to the sender device allowing the sender device to compose the code.

In an embodiment, the tag generating module of the sender device may comprise a printer or a stamp for printing or stamping the code onto a sticker, directly onto the postal delivery or onto the packaging of the postal delivery. Preferably the code is a QR code.

In an embodiment, the sender system is configured to also transmit pick-up data, comprising at least a pick-up location to the delivery system server, which is configured to send a message to a postal service for picking up the postal delivery at said pick-up location. In an embodiment, said pick-up location comprises an IPBA of a recipient device in which the sender can place the postal delivery which is to be sent. The delivery server system then can send a message containing a postal service identification code comprising at least the IPBA of the recipient device of the sender. The recipient device of the sender can be configured to allow access to the recipient area in which the postal delivery is placed, when the identification code is presented to its code scanner. The postal delivery can then be picked up by the postal service to be delivered to the intended recipient device.

In the above, reference is made to a number of databases (first, second, third, fourth, fifth). Note that the information contained in these databases can be interlinked and/or stored within one or more integrated databases. For instance, a single database can be maintained which links the following:
- user ID data
- IPCA of the user
- a list of IPBAs
- for each IPBA: location data of the recipient device having the IPBA
- for each IPBA: type of the IPBA and/or the maximally allowed dimensions for postal deliveries for the recipient device
- for each IPBA: postal delivery IDs for each postal delivery which has been delivered and/or is intended to be delivered to the recipient device.

Furthermore, other data can be linked to the IPCA, such as payment details or credit card details, which allow even easier online shopping transactions.

Further, in the above, reference is made to a number of server systems, in particular delivery server system, identification server system and recipient installation server system. These server systems may be interlinked and or integrated in one or more server systems. In one particular embodiment, the server systems and their functionality may be integrated into a cloud server system. Each of the servers, or the system integrating the servers can be provided with a backup system and configuration for backing up the servers and the databases.

The system of the present invention may also comprise a webserver which can be a front-end web server capable of connecting to one or more of the other servers, or it may be integrated with one or more of the other servers, in particular the delivery system server. The web server may for instance be configured to:
- allow track-and-trace of a postal delivery, e.g. via a website or app; and/or
- provide an interface, e.g. website or app, to a sender system, thereby allowing a sender system to obtain the code for the tag on the postal delivery.

In a preferred embodiment of the present invention, each action or each set of actions related to a specific transaction performed by the delivery server system, the identification server system, the recipient installation server system, any other server system of the present invention and/or an integrated server system, is registered in a blockchain.

## Claims

1. A postal delivery system for worldwide delivery of post and parcels, comprising a recipient device, a sender system, an identification server system and a delivery server system,
whereby the recipient device comprises:
- a reception area for receiving a postal delivery, preferably for receiving a parcel;
- a reading module which comprises a code scanner for scanning a code provided on the postal delivery;
- a recipient processing unit connected to tangible non-volatile memory provided with program code for instructing said recipient processing unit, and at least one recipient connection module configured to connect the recipient processing unit with the identification server system and the delivery server system, whereby the non-volatile memory comprises information representing an Internet Post Box Address (IPBA) assigned uniquely to the recipient device;
- a user registration module comprising a user input module for obtaining user input data, the user registration module connected to the recipient processing unit, whereby the recipient processing unit is configured to send user registration data to the identification server system, the user registration data comprising user identification data derived from said user input data and the IPBA;
whereby the sender system comprises:
- a sender connection module configured to connect the sender system with the delivery server system to:
• send recipient identification data to the delivery server system, the recipient identification data allowing the delivery server system to determine an Internet Post Client Address (IPCA) assigned uniquely to a user, and to
• request a code comprising information representing at least the IPBA of the recipient device or to request said information representing at least the IPBA of the recipient device whereby the sender system is configured to produce a code comprising information representing at least the IPBA of the recipient device;
- a tag generating module for generating a tangible tag comprising said code comprising information representing at least the IPBA of the recipient device, said tangible tag connected to or connectable to the postal delivery;
whereby the identification server system comprises an ID processing unit connected to tangible non-volatile memory provided with program code for instructing said ID processing unit, and an ID connection module configured to connect the ID processing unit with the recipient device and the delivery server system, wherein the ID processing unit is configured to: upon receiving user registration data from a recipient device, linking in a first database the IPBA contained within the user registration data to the IPCA of the user, on the basis of the user identification data contained in the user registration data, by looking up the IPCA in a second database wherein IPCAs are linked to user identification data;
whereby the delivery server system comprises a delivery processing unit connected to tangible non-volatile memory provided with program code for instructing said delivery processing unit, and at least one delivery connection module configured to connect the delivery processing unit with one or more sender systems and optionally with a postal service system and/or one or more recipient devices, wherein the delivery processing unit is configured, upon receiving recipient information data from a sender system:
• to determine the IPCA of the user from the recipient identification data;
• to obtain the IPBA of the recipient device linked to the IPCA by looking up the IPBA in said first database, and
• to send the code comprising information representing at least the IPBA of the recipient device to the sender system or to send said information representing at least the IPBA of the recipient device to the sender system such that the sender system can produce a code comprising information representing at least the IPBA of the recipient device.

2. A postal delivery system according to claim 1, wherein the identification server system and the delivery server system are integrated, or are part of a cloud server system.

3. A postal delivery system according to claim 1 or 2, wherein said code on said tag comprises information representing any or any combination of the following:
- the IPCA of the user to allow identification of the user, whereby preferably the reading module is configured to display or provide a message in which the IPCA and/or the user thereof is identified when the code is presented to the code scanner;
- sender identification data such as an IPCA uniquely assigned to the sender, to allow easy returns in case of non-delivery or to allow identification of the sender, preferably whereby the sender system also comprises a recipient device and preferably whereby the code comprises information representing the IPBA of the recipient device of the sender system;
- location data of the recipient device, such as longitude and latitude or a common address;
- an ordering or reference number which is identifiable to the sender and/or user;
- a postal delivery ID, uniquely assigned to a postal delivery, preferably by the delivery system server and linked to the IPBA of the intended recipient device and preferably also to the IPCA of the user to which the postal delivery is sent,
preferably said code on said tag comprising information representing said sender identification data.

4. A postal delivery system according to any of the claims 1 to 3, wherein the code provided on the tangible tag is a quick response (QR) code.

5. A postal delivery system according to any of the claims 1 to 4, wherein the code is encrypted.

6. A postal delivery system according to any of the claims 1 to 5, wherein the recipient device comprises a hardware address and whereby the recipient device is configured to connect to a recipient installation server system when it is installed in a particular location, the recipient installation server system being configured to maintain a fifth database linking IPBAs to hardware addresses of recipient devices and preferably also to location data of the recipient device and optionally other identifiable data linked to the recipient device, such as an internet protocol (IP) number, wherein the recipient device is configured to contact the recipient installation server system and to transmit the hardware address, preferably location data, e.g. based on a built-in Global Positioning system (GPS) module, and optionally e.g. IP number, to the recipient installation server system, and whereby the recipient installation server system is configured to assign and transmit a unique IPBA to said recipient device.

7. A recipient device (2) comprising:
- a reception area (21) for receiving a postal delivery, preferably for receiving a parcel;
- optionally a reading module (22) which comprises a code scanner for scanning a code comprised in a tag provided on the postal delivery;
- a recipient processing unit (23a) connected to tangible non-volatile memory provided with program code for instructing said recipient processing unit, and at least one recipient connection module (23b) configured to connect the recipient processing unit with an identification server system (4) and a delivery server system (5), whereby the non-volatile memory comprises information representing an Internet Post Box Address (IPBA) assigned uniquely to the recipient device;
- a user registration module (24) comprising a user input module (25) for obtaining user input data, the user registration module (24) connected to the recipient processing unit (23), whereby the recipient processing unit is configured to send user registration data to the identification server system (4), the user registration data comprising user identification data derived from said user input data and the IPBA.

8. A sender system (3) comprising:
- a sender connection module (31) configured to connect the sender system (3) with a delivery server system (5) to:
• send recipient identification data to the delivery server system (5), the recipient identification data allowing the delivery server system (5) to determine an Internet Post Client Address (IPCA) assigned uniquely to a user, and to
• receive a code comprising information representing at least the IPBA of a recipient device or to receive said information representing at least the IPBA of the recipient device whereby the sender system (3) is configured to produce a code comprising information representing at least the IPBA of the recipient device;
- a tag generating module (32) for generating a tangible tag (33) comprising said code comprising information representing at least the IPBA of the recipient device, said tangible tag (33) connected to or connectable to the postal delivery (34).

9. A sender system according to claim 8, comprising a recipient device according to claim 7, preferably whereby said code also comprises the IPBA of the recipient device of the sender system.

10. An identification server system (4) comprising an ID processing unit (41) connected to tangible non-volatile memory provided with program code for instructing said ID processing unit (41), and an ID connection module (41a) configured to connect the ID processing unit (41) with a recipient device (2) and a delivery server system (5), wherein the ID processing unit (41) is configured to, upon receiving user registration data from a recipient device (2), linking in a first database (42) the IPBA contained within the user registration data to the IPCA of the user, on the basis of the user identification data contained in the user registration data, by looking up the IPCA in a second database (43) wherein IPCAs are linked to user identification data.

11. A delivery server system (5) comprising a delivery processing unit (51) connected to tangible non-volatile memory provided with program code for instructing said delivery processing unit (51), and at least one delivery connection module (51a) configured to connect the delivery processing unit (51) with one or more sender systems (3) and optionally with a postal service system (6) and/or one or more recipient devices (2), wherein the delivery processing unit (51) is configured, upon receiving recipient information data from a sender system (3):
• to determine the IPCA of the user from the recipient identification data;
• to obtain the IPBA of the recipient device linked to the IPCA by looking up the IPBA in a first database (42), and
• to send code comprising information representing at least the IPBA of the recipient device to the sender system (3) or to send said information representing at least the IPBA of the recipient device to the sender system (3) such that the sender system (3) can produce a code comprising information representing at least the IPBA of the recipient device.

12. A method for worldwide delivery of post and parcels of the present invention comprising the following steps:
- registering one or more users of a recipient device in a first database, by:
• inputting user input data for a user in a user input module of a recipient device;
• sending user registration information comprising user identification data derived from said user input data, and an Internet Post Box Address (IPBA) assigned uniquely to the recipient device, to an identification server system;
• linking in a first database (42) the IPBA contained within the user registration data to an Internet Post Client Address (IPCA) of the user, on the basis of the user identification data contained in the user registration data, by looking up the IPCA in a second database (43) wherein IPCAs are linked to user identification data,
- preparing a postal delivery for delivery from a sender system to a recipient device, by:
• providing recipient identification data to the sender system, said recipient identification data allowing determination of an Internet Post Client Address (IPCA) assigned uniquely to a user;
• determining an Internet Post Box Address (IPBA) of the recipient device linked to the IPCA by looking up the IPBA in a first database (42) via a delivery system server,
• determining a code comprising information representing at least the I PBA of the recipient device to the sender system (3);
• providing a tangible tag on a postal delivery, said tangible tag comprising said code comprising information representing at least the I PBA of the recipient device, and
- sending the postal delivery to the recipient device.

13. A method for registering one or more users of a recipient device in a first database, comprising the steps of:
- inputting user input data for a user in a user input module of a recipient device;
- sending user registration information comprising user identification data derived from said user input data, and an Internet Post Box Address (IPBA) assigned uniquely to the recipient device, to an identification server system;
- linking in a first database (42) the IPBA contained within the user registration data to an Internet Post Client Address (IPCA) of the user, on the basis of the user identification data contained in the user registration data, by looking up the IPCA in a second database (43) wherein IPCAs are linked to user identification data.

14. A method for delivering a postal delivery from a sender system to a recipient system, comprising the steps of:
- providing recipient identification data to the sender system, said recipient identification data allowing determination of an Internet Post Client Address (IPCA) assigned uniquely to a user;
- determining an Internet Post Box Address (IPBA) of the recipient device linked to the IPCA by looking up the IPBA in a first database (42) via a delivery system server,
- determining a code comprising information representing at least the IPBA of the recipient device to the sender system (3);
- providing a tangible tag on a postal delivery, said tangible tag comprising said code comprising information representing at least the IPBA of the recipient device, and
- sending the postal delivery to the recipient device.
